Europäisches Patentamt

European Patent Office

Office européen des brevets

(19)

(11) Publication number: **0 108 459**
**B1**

(12) **EUROPEAN PATENT SPECIFICATION**

(45) Date of publication of patent specification: **29.04.87**

(51) Int. Cl.⁴: **A 01 B 33/06,** A 01 B 33/14

(21) Application number: **83201577.0**

(22) Date of filing: **02.11.83**

(54) Soil cultivating machine.

(30) Priority: **03.11.82 NL 8204259**

(43) Date of publication of application:
**16.05.84 Bulletin 84/20**

(45) Publication of the grant of the patent:
**29.04.87 Bulletin 87/18**

(84) Designated Contracting States:
**IT**

(56) References cited:
**DE-U-7 827 326**
**FR-A-2 410 424**
**NL-A-7 702 876**
**US-A-2 088 141**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a soil cultivating machine comprising a transverse frame part in which a plurality of cultivating members are supported, the said members being power driven about vertical or substantially vertical shafts, that underneath the said frame part are provided with a time holder that extends horizontal or substantially horizontal and has two arms located diametrically opposite one another and adjoining a hub by means of which the said holder is secured for said shaft, strip-shaped tines being provided having a downwardly extending operative part and a horizontal or substantially horizontal fastening part that is bolted to the underside of said arm.

In soil cultivating machines of the kind set forth as known from the French Patent 2410424 the fastening parts of the respective tines are secured to the underside of the arms of the tine-holder by means of bolts, whereby each of the fastening parts at its free end is provided with a circular recess in such a way that with secured fastening parts, there is a space between the hub and the free ends of the fastening parts, which touch each other on both sides of the hub over a relatively short distance. This provides a mounting of the tines that as praxis has shown many times is not sufficient to guarantee a suitable fixing of a tine, due to the reaction forces exerted on the operative parts of the tine which forces constantly vary in direction and magnitude.

The invention now has for its object to provide a tine fixation that is more reliable than the known one and thereby can easily be achieved in an inexpensive way.

In accordance with the invention on the underside of the hub vertical extending, diametrically opposed contact surfaces are provided and each tine has a rectangular fastening part having a flat end that engages a corresponding one of said contact surfaces of the hub. With this construction an abutment for the end of its fastening portion is achieved by means of which the above mentioned forces can be dealt with in such a way that a loosening of a bolt does not occur or hardly ever occurs.

For a better understanding of the invention and to show how the same may be carried into effect reference will be made by way of example to the accompanying drawing.

Fig. 1 is a plan view of a soil cultivating machine comprising cultivating members having a tine holder and a tine fixation in accordance with the invention.

Fig. 2 is an enlarged, partial elevational view in the direction of the arrow II in Fig. 1.

Fig. 3 is an elevational view taken on the line III—III in Fig. 2 and

Fig. 4 is an elevational view in the direction of the arrow IV in Fig. 3.

The figures illustrate a device, more particularly a soil cultivating machine for preparing a seed bed comprising a hollow frame part 1 extending transversely of the direction of movement A.

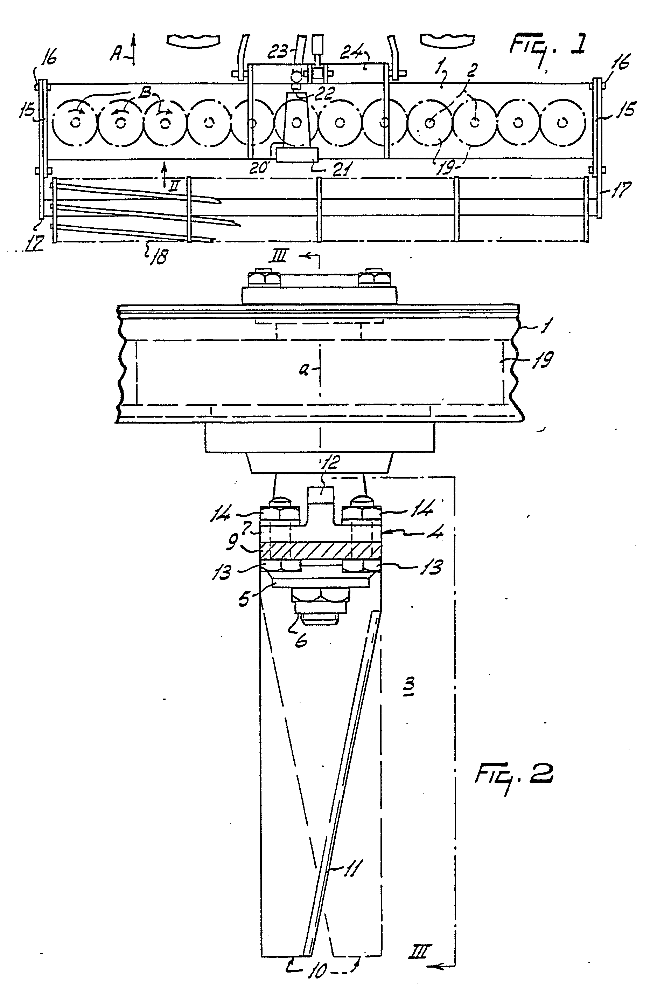

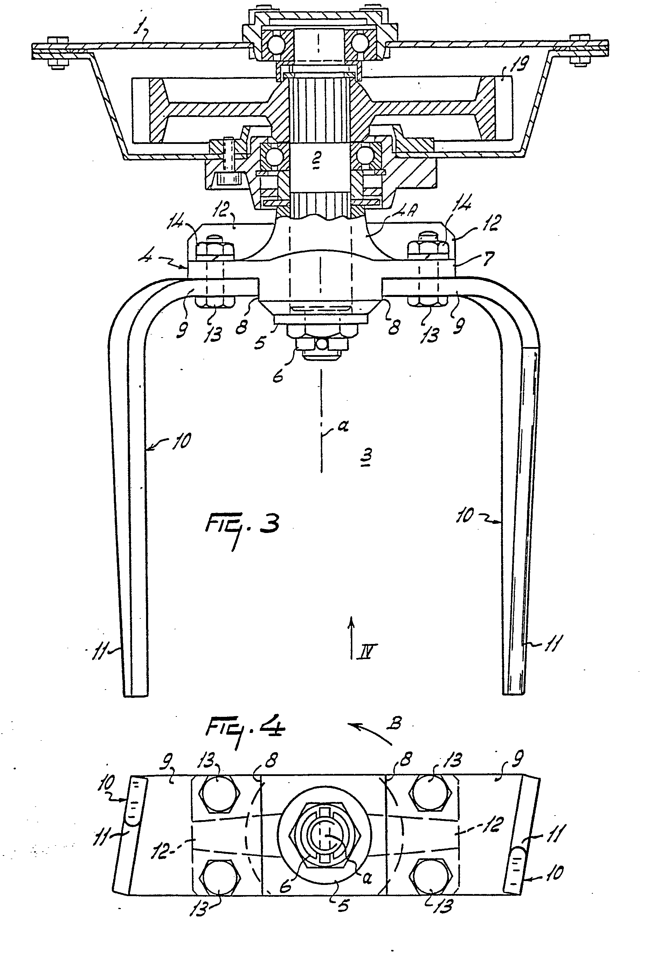

In the frame part 1 are journalled shafts 2 at equal intervals of preferably 25 cms for cultivating members 3, said shafts being preferably in at least substantially vertical positions. Each of the cultivating members 3 comprises a tine carrier or holder 4 arranged on the end of the shaft 2 projecting from below the frame part 1. For this purpose the carrier or holder 4 is provided near the middle with a hub 4A having an inner profile formed by key ways which are adapted to co-operate with corresponding key ways on the lower end of the shaft 2. Each shaft 2 has at its lower end a portion of smaller diameter which is provided with screwthread. For fastening the carrier or holder 4 said portion is surrounded by a locking plate 5, which bears on the lower side of the hub and is held in place with the aid of a guarded nut 6 adapted to co-operate with the screwthread on the portion concerned. Each carrier or holder 4 has two diametrically opposite, flat arms 7 extending outwards away from the hub 4A and terminating at the top gradually in the hub 4A. On the underside the hub 4A has diametrically opposite contact surfaces 8, which extend tangentially to the rotary axis $a$ of a cultivating member 3. Each contact surface 8 engages the flat end of a rectangular fastening part 9 of a strip-shaped tine 10. The fastening part 9 of each tine 10 has a width corresponding at least substantially with the width of a contact surface 8 and an arm 7 and it extends at least substantially in a horizontal direction (Figs. 2 to 4). On the top side each arm 7 has a rim or rib 12 having its largest height on the side remote from the hub 4A and being at least substantially parallel to the longitudinal line of the arm. The top side of the rim or rib 12 goes through a bevelled part over in at least substantially straight, downwardly directed outer side (Fig. 3). The largest height of the rim 12 is about three times the thickness of an arm 7 of the holder 4. On both sides of the rim or rib 12, which is tapering towards the free end, viewed from above (Fig. 4), each arm 7 has fastening points formed by holes through which a bolt 13 is passed onto which a nut 14 is screwed on the top side of each arm 7. A plane going through the longitudinal centre lines of the respective bores is at least substantially parallel to a contact surface 8. With the aid of the bolts 13 and the contact surface 8 on one side of the hub 4A for the straight end of the rectangular fastening part 9, which furthermore bears on the underside of an arm 7, a very effective and reliable fixation of a strip-shaped tine 10 can be obtained. The fastening part 9 terminates through a gradually curved part in an operative part 11 of the tine 10. The operative part 11 of each tine 10 extends at least substantially parallel to the rotary axis $a$ of a cultivating member 3 and is disposed so that the larger width extends at least substantially in a tangential direction. Said part is torsioned as a whole about its longitudinal axis in a manner such that a plane parallel to the broader side is at an angle of about 10° to the tangential plane and the front side of the operative part is further remote from the rotary axis $a$ of the cultivating member 3 than the rear side. The rear side of the operative part extends perpendicularly downwards, whereas the front side is inclined to the rear along a straight line from top to bottom (Fig. 2) in a manner such that said side is at an angle of about 12° to a vertical plane going through the rotary axis of a cultivating member and the longitudinal centre line of the carrier or holder 4.

At each end the frame part 1 is provided with a plate 15 extending in upward direction in the direction of movement A. Each of the plates 15 is provided near the front side with a stub shaft 16, about which is pivotally arranged an arm 17 extending to the rear along a plate and being adjustable in a direction of height. Between the free ends of the arms 17 is arranged a freely rotatable roller 18.

Inside the hollow frame part 1 each of the shafts 2 is provided with a spur gear wheel 19 so that the gear wheels on neighbouring shafts 2 are drivably in mesh with one another. Near the middle the shaft 2 of a cultivating member 3 is prolonged as far as into a gear box 20, in which said shaft is connected through a change-speed gear 21 with a shaft 22 extending in the direction of movement A and projecting from the front side of the gear box. The end of the shaft 22 protruding from the gear box can be coupled by means of an auxiliary shaft 23 with the power take-off shaft of a tractor.

At the front of the frame part 1 a trestle 24 is provided for attaching the machine to the three-point lifting device of a tractor.

During operation the machine coupled by means of the trestle 24 with the three-point lifting device of a tractor is propelled in the direction indicated by the arrow A and from the power take-off shaft through the auxiliary shaft 23 and the transmission described above the neighbouring cultivating members 3 are driven in the direction indicated by arrows in Fig. 1. The operative parts 11 of the strip-shaped tines 10 of neighbouring cultivating members work strips of soil at least adjoining one another.

Since the fastening part 9 of each strip-shaped tine 10 bears by a tangential end on the contact surface 8 on the underside of the hub 4A and the underside of an arm 7 and is fastened at two relatively spaced fastening points by means of the bolts 13, a very effective and reliable fixation of a strip-shaped tine 10 is obtained. The rim or rib 12 located between the bolts 13 on the top side of each of the arms 7 of a carrier or holder 4 provides not only a reinforcement of the arms but also a protection of the bolt fastening.

The invention is not limited to the foregoing statements but also relates to all details of the Figures whether described or not described.

## Claims

1. A soil cultivating machine comprising a transverse frame part (1) in which a plurality of cultivating members (3) are supported, the said members being power driven about vertical or substantially vertical shafts (2), underneath the said frame part (1) the cultivating members being each provided with a tine holder (4) that extends horizontal or substantially horizontal and has two arms (7) located diametrically opposite one another and adjoining a hub (4A) by means of which the said holder is secured to said shaft (2), strip-shaped tines (10) being provided having a downwardly extending operative part (11) and a horizontal or substantially horizontal fastening part (9) that is bolted to the underside of said arm (7), characterised in that on the underside of the hub (4A) vertically extending diametrically opposed contact surfaces (8) are provided and each tine (10) has a rectangular fastening part (9) having a flat end that engages a corresponding one of said contact surfaces (8) of the hub (4A).

2. A soil cultivating machine as claimed in claim 1 wherein the width of the contact surface is equal or substantially equal to that of the said flat end of the fastening part.

## Patentansprüche

1. Bodenbearbeitungsmaschine mit einem quer liegenden Rahmentteil (1), and dem mehrere Bearbeitungseinheiten abgestützt sind, die um vertikale oder annähernd vertikale Achsen (2) angetrieben sind, wobei jede Bearbeitungseinheit unterhalb des Rahmens (1) mit einem horizontal oder annähernd horizontal ausgerichteten Zinkenhalter (4) versehen ist, der zwei einander diametral gegenüberliegend angeordnete Arme (7) aufweist, die an eine Nabe (4A) angrenzen, mit der der Zinkenhalter an der Welle (2) befestigt ist, und bie der streifenförmige Zinken (10) vorgesehen sind, die einen nach unten gerichteten Arbeitsteil (11) und einen waagerechten oder annähernd waagerechten Befestigungsteil (9) aufweisen, der an der Unterseite des Armes (7) verschraubt ist, dadurch gekennzeichnet, daß an der Unterseite der Nabe (4A) vertikal ausgerichtete, einander diametral gegenüberliegende Anlageflächen (8) vorgesehen sind und jeder Zinken (10) ein rechteckiges Befestigungsteil (9) mit einem flachen Endstück aufweist, das an einer der entsprechenden Anlageflächen (9) der Nabel (4A) anliegt.

2. Bodenbearbeitungsmaschine nach Anspruch 1, bei der die Breite der Anlagefläche zumindest annähernd der Breite des flachen Endstückes des Befestigungsteiles entspricht.

## Revendications

1. Machine pour la culture du sol comprenant une partie transversale (1) d'un chassis dans laquelle sont soutenus plusieurs organes de culture (3), ces organes étant entraînés à partir d'un moteur autour d'axes (2) verticaux ou sensiblement verticaux en dessous de ladite partie (1) qui chassis, chaque organe de culture étant pourvu d'un porte-outils (4) qui s'étend horizontalement ou sensiblement horizontalement et a deux bras (7) situés diamétralement à l'opposé l'un de l'autre et attenants à un moyeu (4A) au moyen duquel ledit porte-outils est fixé audit axe (2), des dents (10) en forme de langues étant prévues avec une partie active (11) s'étendant vers le bas et une partie de fixation (9) horizontale ou sensiblement horizontale qui est boulonnée sur la face inférieure dudit bras (7),

caractérisée en ce que sur la face inférieure du moyeu (4A) sont prévues des surfaces de contact (8) s'étendant verticalement et diamétralement opposées et en ce que chaque dent (10) a une partie de fixation (9) rectangulaire ayant une extrémité plate qui s'engage contre une desdites surfaces de contact (8) du moyeu (4A) qui lui correspond.

2. Machine pour la culture du sol selon la revendication 1, dans laquelle la largeur de la surface de contact (8) est égale ou sensiblement égale à celle de ladite extrémité plate de la partie de fixation (9) de la dent.

0 108 459

FIG. 1

FIG. 2

1

FIG. 3

FIG. 4